# EUROPÄISCHE PATENTSCHRIFT

(11) **EP 1 982 790 B1**
(45) Veröffentlichungstag und Bekanntmachung des Hinweises auf die Patenterteilung: **19.09.2018**
(21) Anmeldenummer: 07405124.4
(22) Anmeldetag: 20.04.2007
(51) Int. Cl.: B23K 1/20, F28F 1/40, F28F 1/24, B23K 101/14, B23K 101/34, B23K 103/02, B23K 103/10, B23K 1/00, B23K 35/02, B23K 35/22

(54) **Wärmetauscherrohre und Verfahren zur Herstellung von Wärmetauscherrohren**
Heat exchanger pipe and method for manufacturing heat exchanger pipes
Tuyaux d'échange thermique et procédé de fabrication de tuyaux d'échange thermique

(43) Veröffentlichungstag der Anmeldung: 22.10.2008
(73) Patentinhaber: Innospin AG, 5430 Wettingen (CH)
(72) Erfinder: Scheidegger, Simon, 5210 Windsch (CH); Tönnes, Christoph, 5200 Brugg AG (CH); Mäckle, Frank, 5210 Windisch (CH)
(74) Vertreter: Rentsch Partner AG

(56) Entgegenhaltungen:
- WO-A-01/54840
- GB-A- 1 183 335
- JP-A- 2 290 669
- JP-A- 6 304 779
- JP-A- 2005 262 248
- US-A- 3 855 682
- US-A- 4 032 059
- US-A- 4 949 543
- US-A- 5 110 035
- US-A- 5 251 374
- US-A1- 2006 289 151
- US-A1- 2007 164 088

## Beschreibung

### Technisches Gebiet

Die vorliegende Erfindung bezieht sich auf das Gebiet der Thermodynamik. Sie betrifft ein Verfahren zur Herstellung von Wärmetauscherrohren und Wärmetauscherrohre.

### Technologischer Hintergrund und Stand der Technik

Wärmetauscherrohre werden unter anderem bei luftgekühlten Kondensatoren in Kraftwerken, Kehrichtverbrennungsanlagen, Heizkraftwerken und Industrieanlagen mit Energierückgewinnung eingesetzt. Solche bekannten, luftgekühlten Kondensatoren -im folgenden auch lediglich Kondensatoren genannt- erfüllen eine ähnliche Funktion wie wassergekühlte Kondensatoren, das heisst, sie verflüssigen den Abdampf einer Dampfturbine, welcher energetisch nicht mehr genutzt werden kann, und führen das entstehende Kondensat in den geschlossenen Wasser-Dampf-Kreislauf zurück. Im Gegensatz zu Kühltürmen wird dem Abdampf bei Kondensatoren die thermische Energie mittels Luftkühlung (Ventilatoren) entzogen. Kondensatoren kommen somit ohne jegliches Kühlwasser aus. Heute besteht eine gesteigerte Nachfrage nach so genannten "trocken kühlenden Kondensatoren" wegen der zunehmenden Wasserknappheit und höheren Anforderungen bzw. behördlichen Auflagen für die Bewilligung von Kraftwerken oder Industrieanlagen. Hier spielen die ökologische Betrachtung des Wasserverbrauchs und der Erwärmung von fliessenden Gewässern eine wesentliche Rolle.

Bekannt ist, Wärmetauscherrohre für Kondensatoren in einer A-förmigen Konfiguration zu erstellen. Die DE 690 33 556 T2 zeigt derart gefertigte Wärmetauscherrohre und ein Herstellungsverfahren dazu. Dabei gelangen beispielsweise berippte Rundrohre, berippte Ovalrohre oder berippte Flachrohre zum Einsatz. Bei der Berippung von Rohren aus Stahl und beliebiger, aufgezeigter Geometrie werden zunächst die Rohre schraubenförmig genutet und anschliessend werden flache Aluminiumbleche eingezogen. Eine andere Methode sieht vor, Rohre mit Aluminiumblechen mechanisch schraubenförmig aufzuwickeln.

Insbesondere bei der Berippung von Ovalrohren aus Stahl werden flache, mit Distanzhaltern versehene Stahlrippen aufgesteckt und anschliessend gemeinsam mit dem Ovalrohr aussenseitig und oberflächig verzinkt und verbunden.

Die heutige Herstellung von berippten Flachrohren erfolgt, indem zuerst ein mit Aluminium plattiertes Flachrohr aus Stahl geformt, geschweisst und an der Schweissnaht mit Aluminium nachbeschichtet wird, nachfolgend eine Rippe aus einer mit Lot plattierten AluminiumLegierung geformt wird, ein Flussmittel appliziert und die geformte Rippe beidseitig auf dem Flachrohr befestigt wird und diese Rippe dann in einem Ofen mit kontrollierter Atmosphäre bei ungefähr 600°C auf das Flachrohr hartgelötet wird. Flachrohre geniessen gegenüber berippten Rundrohren oder Ovalrohren den Vorteil, dass sie resistenter sind gegenüber Durchfrierung und einen tieferen luftseitigen Druckverlust aufweisen.

Ein weiterer wichtiger Aspekt von luftgekühlten Kondensatoren ist die lange Lebensdauer. Die Kondensatoren müssen eine Lebensdauer von mehr als 30 und teilweise sogar mehr als 40 Jahren oder darüber haben. Da derartige Kondensatoren den Umwelteinflüssen ausgesetzt sind, müssen sie sehr korrosionsbeständig sein. Darüber hinaus sind die Kondensatoren entlang ihrer Innenwandung auch einer Kontamination ausgesetzt, die durch Verunreinigungen des sie durchströmenden Fluids hervorgerufen werden. Diese Verunreinigungen sind dabei bereits bei der Inbetriebnahme vorhanden oder sie entstehen aufgrund von Oxidation bzw. Korrosion im gesamten Wasser-Dampf-Kreislauf eines Kraftwerks.

Die Innenwandung eines Flachrohres für Kondensatoren besteht bekanntermassen aus ungeschütztem Baustahl ohne Oxidations- und Korrosionsbeständigkeit. Die innere Oberfläche eines luftgekühlten Kondensators ist aber zusammen mit dem Kessel im Wasser-Dampf-Kreislauf eines Kraftwerks die mit Abstand grösste Fläche, welche dem prozessseitigem Fluid ausgesetzt ist. Dies führt zwangsweise zu einer betriebsbedingt entsprechend hohen Konditionierung der Wasser-Dampf-Chemie u. a. auf einem basischen pH-Wert, um die Wärmetauscherrohre gegen massive Oxidation, Korrosion oder sogar Durchrostung zu schützen.

Vor Inbetriebnahme bedeutet das auch, dass der Kondensator mit einem zeit- und kostenintensiven Verfahren gereinigt und gespült werden muss und das dabei verwendete deionisierte Wasser verworfen werden muss. Ein gleiches Verfahren muss ebenfalls nach Reparaturen und vor einer Wiederinbetriebnahme angewendet werden mit dem gleichen Verwerfen "verbrauchten" Wassers. Betriebliche und ökologische Aspekte rufen hier nach einer Verbesserung.

Des Weiteren bedarf es während des laufenden Kraftwerksbetriebs einer Ausfiltrierung entstehender Rostpartikel und einer aufwendigen Polisher-Anlage. Bei normalem betrieblichem Stillstand besteht die Gefahr von Lochfrasskorrosion und Durchrostung. Selbst beim Transport zum Installationsort und bei der Montage vom Kondensator bedürfen die ungeschützten Oberflächen der Wärmetauscherrohre einem Schutz mittels Abdeckungen, Schutzgas und/oder Trocknungsgeräten.

Bei der Herstellung von aus mit Aluminium einseitig plattiertem Blech muss nach Umformen und dem Schweissen zum Flachrohr entlang der Schweissnaht mit Aluminium nachbeschichtet werden. Hierfür wird Aluminium typischerweise mittels Flammspritzen als 30mm breiter Streifen aufgebracht. Dieser zusätzliche Produktionsschritt kann zur Folge haben, dass sich in einer durch das Schweissen entstandenen, spröden Eisen-Aluminium-Zwischenschicht Verunreinigungen einstellen oder Materialdefekte auftreten. Die aufgespritzte Aluminiumschicht weist zudem eine Rauhigkeit auf, die beim nachfolgenden Hartverlöten des Rohrs mit Kühlrippen zu Qualitätseinbussen der Lötverbindung führen kann, was wiederum den Wärmewirkungsgrad der Gesamtanlage beeinträchtigt. Qualitativ eingeschränkte Lötverbindungen können ebenfalls Grund für ein Abplatzen von Kühlrippen sein.

Bekannt ist auch, dass Verbindungen zwischen Aluminium und Eisen vergleichsweise spröde sind und sich somit eine erhöhte Empfindlichkeit gegenüber betriebsbedingten thermischen/mechanischen Spannungen einstellt; dies gilt zudem gegen Schlag- und/oder Torsionsbeaufschlagung bei Transport oder Montage. Es besteht eine geringe Bruchzähigkeit und Duktilität der Eisen-Aluminium-Zwischenschicht verbunden mit einer hohen Defektempfindlichkeit in Bezug auf Poren, Sandstrahlmittel, Oxide und Einschlüssen. Diese tiefe Defekttoleranz der Eisen-Aluminium-Zwischenschicht bedingt einen entsprechend hohen Aufwand bei der Produktion und der Qualitätskontrolle.
In der JP 02 290669 ist ein Wärmetauscherrohr, umfassend ein durchströmtes Rohr mit einer Anzahl Kühlrippen offenbart, wobei das Rohr aus einem rostfreien Edelstahl besteht und mit Aluminium an einer zu lötenden Fläche applizierbar ist, zwecks direkter Lötbarkeit der Anzahl Kühlrippen mit der Aussenwand und zwecks Korrosionsbeständigkeit einer Aussenwand des Rohrs gegenüber äusseren Einflüssen. Bei dieser herkömmlichen Beschichtung des Edelstahlrohrs mit Aluminium kann sich die oben bereits erwähnte Eisen-Aluminium-Zwischenschicht ausbilden mit der ebenfalls bereits diskutierten Defektempfindlichkeit.

### KURZE DARSTELLUNG DER ERFINDUNG

Es ist darum die Aufgabe der vorliegenden Erfindung, Wärmetauscherrohre und ein Verfahren zu deren Herstellung zu schaffen, womit die Nachteile der bekannten Wärmetauscherrohre und deren Herstellungsverfahren überwunden werden.
Insbesondere ist es die Aufgabe der vorliegenden Erfindung, Wärmetauscherrohre und ein Verfahren zu ihrer Herstellung zu schaffen, womit eine gegenüber dem Stand der Technik massgeblich verbesserte Defekttoleranz und Korrosionsbeständigkeit der Wärmetauscherrohren erzielbar ist und zudem eine einfachere und kostengünstigere Herstellung ermöglicht wird.

Die der Erfindung für das Verfahren zugrunde liegende Aufgabe wird durch die Merkmale des Anspruchs 1 gelöst. Vorteilhafte Ausgestaltungen für das Verfahren sind Gegenstand der abhängigen Ansprüche 2 und 3.
Der Kern der Erfindung ist darin zu sehen, dass ein Rohr eines Wärmetauscherrohrs aus rostfreiem Edelstahl oder aus plattiertem Baustahl hergestellt wird und unter Verwendung eines Lötmittels zwischen diesem Rohr und einer Anzahl Kühlrippen eine Hartlötverbindung hergestellt wird, die gegenüber Korrosion sowohl an einer Aussenwand des Rohrs besonders beständig ist und wobei das Rohr an seiner Innenwand gegenüber fluiden Medien auch besonders korrosionsbeständig ist.

Als ein besonderer Vorteil der Erfindung ist herauszustellen, dass die Kühlrippen vor dem Hartlötprozess keinerlei Oberflächenbeschichtung bedürfen; sie werden unmittelbar verlötet.

Als besonders vorteilhaft ist ferner herauszustellen, dass durch Wahl von rostfreiem Edelstahl oder innen- und aussenseitig plattiertem Baustahl zum einen eine qualitativ hervorragende Lötbarkeit des Rohrs mit den Kühlrippen auf der Aussenwand gegeben ist und gleichzeitig die Korrosionsbeständigkeit der Innenseite des Rohrs bei Beaufschlagung mit der Wasser-Dampf-Chemie eines Kraftwerks signifikant erhöht werden kann. Somit kann durch die Verwendung von rostfreiem Edelstahl oder innen- und aussenseitig plattiertem Baustahl ein Rohr für ein Wärmetauscherrohr bereitgestellt werden, dass hinsichtlich der Verarbeitbarkeit und des Verschleisses/der Alterung eine erheblich verbesserte Ausgestaltung gegenüber dem aufgezeigten Stand der Technik zeigt.

Von besonderem Vorteil ist, wenn die Lötmittel auch zwischen benachbarten Kühlrippen und über den seitlichen Rand zwischen einer Berührungsfläche der Kühlrippen und dem Rohr hinaus auf diesem Rohr appliziert werden, weil dadurch eine gegenüber dem Stand der Technik massgeblich verbesserte Korrosionsbeständigkeit erzielbar ist.

Nicht nur bezüglich der Herstellung können Vereinfachungen herausgestellt werden, auch in Bezug auf den laufenden Kraftwerksbetrieb und die zugehörige Inbetriebnahme bzw. Wiederinbetriebnahme nach Stillstand zeigt die Erfindung eine hervorzuhebende ökologische Verträglichkeit gegenüber Bekanntem.

Die Hartlötverbindung zwischen den Kühlrippen und dem Rohr ist geprägt von dem jeweiligen Lötmittel für Edelstahl oder plattiertem Baustahl und zeigt sich besonders duktil und zäh, so dass betriebsbedingte oder montagebedingte Beanspruchungen dem erfindungsgemässen Wärmetauscherrohr unschädlich gegenüberstehen; Standzeiten können somit erhöht werden, Unterhalts- und Üerwachungsarbeiten minimiert werden.

Die der Erfindung für das Wärmetauscherrohr zugrunde liegende Aufgabe wird gelöst durch die Merkmale des Anspruchs 4. Weitere vorteilhafte Ausgestaltungen dieser Erfindung sind Gegenstand der abhängigen Ansprüche 5 und 6.

Da sämtliche Vorteile, die für das Wärmetauscherrohr Gültigkeit haben, bereits ihre Würdigung beim Verfahren zur Herstellung eines solchen erfindungsgemässen Wärmetauscherrohrs erfuhren, wird an dieser Stelle auf eine Wiederholung zugunsten der Textökonomie verzichtet.

### Kurze Beschreibung der Zeichnung

In der Zeichnung sind zwei Ausführungsbeispiele der Erfindung vereinfacht dargestellt, und zwar zeigt
Fig. 1 eine Schnittdarstellung durch ein erfindungsgemässes Wärmetauscherrohr aus rostfreiem Edelstahlrohr, und die
Fig. 2 eine Schnittdarstellung einer Ausführungsvariante des erfindungsgemässen Wärmetauscherrohrs aus plattiertem Baustahl.

### Wege zur Ausführung der Erfindung

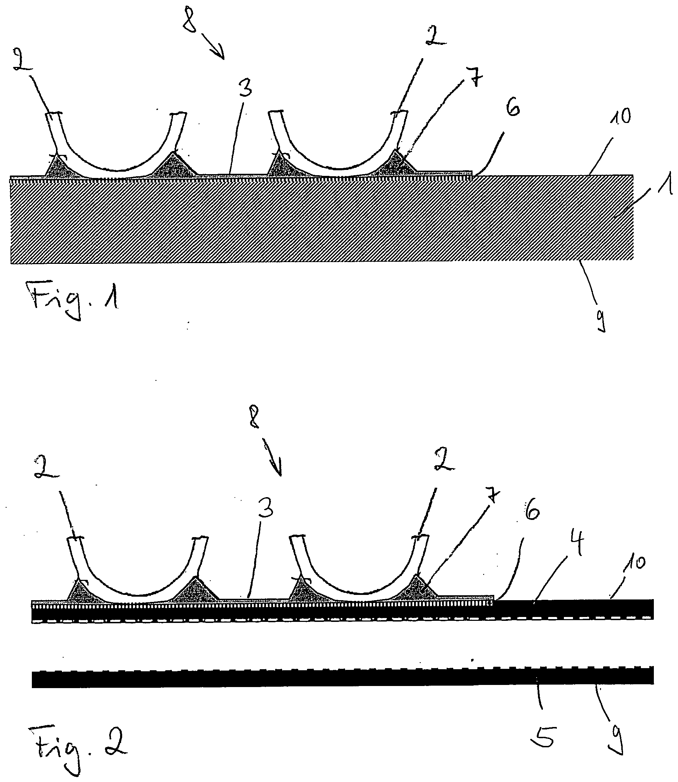

In Fig. 1 ist eine Schnittdarstellung des erfindungsgemässen Wärmetauscherrohrs 8 - bestehend aus rostfreiem Edelstahl- nach einem Lötprozess dargestellt, der eine Rohrwand 1 mit einer Kühlrippe 2 hartlötend verbindet.

Das Herstellverfahren für die erfindungsgemässen Wärmetauscherrohre 8 sieht die folgenden Schritte vor:
1. Ein Kernband aus vollständig reinem Edelstahl, z. B. 1,4509 mit 18% Cr, wird zu einem Flachrohr gebogen und mittels Schweissen entlang einer Rohrlängsnaht geschlossen. Diese Schweissnaht wird einer Glättung unterzogen, eine weitere Behandlung ist nicht notwendig.
2. Für die Fertigung der Kühlrippe 2 steht ein Band aus einer Aluminiumlegierung oder reinem Aluminium bereit; dieses Kaltband wird in eine dreidimensionale Kühlrippenform kalt umgeformt.
3. Das Lötmittel wird auf einer zu lötenden Fläche für die Verbindung zu den Kühlrippen 2, auf einer Fläche zwischen den Kühlrippen und über die seitlichen Aussenbereichen der Kühlrippen mindestens 5mm hinausragend auf die Rohrwand 1 aufgetragen. Das Lötmittel besteht hier aus einem Lötmaterial, z.B. AA4343, als dünnes Band von 0.02 bis 0.2mm Dicke, welches beidseitig mit einem Flussmittel, z.B. NOCOLOK®, bestrichen ist.
4. Das so beschichtete Flachrohr und die Kühlrippen werden zusammengeführt.
5. Anschliessend erfolgt ein kontinuierlicher Hartlötprozess, womit eine feste, spalt- und porenfreie Lötverbindung zwischen der Kühlrippe 2 und der Rohrwand 1 entsteht.

Es bildet sich so eine fest haftende Lötverbindung zwischen der Kühlrippe 2 und der Rohrwand 1 mit guter Wärmeleitfähigkeit aus und eine ca. 5 - 200 µm dicke, oberflächige Abdeckschicht 3 aus festem Lotmaterial 7 zwischen den Kühlrippen 2 und in unmittelbarer Nähe der Kühlrippen, welche metallurgisch mit der Rohrwand 1 und der Lötverbindung verbunden ist und gut haftet. Des Weiteren bildet sich eine Zwischenschicht 6 aus Eisen-Aluminiden mit einer Dicke von <10µm Dicke zwischen der Rohrwand 1 und der Abdeckschicht 3 aus.

Diese Verbindung zwischen der Rohrwand 1 und der Kühlrippe 2 verunmöglicht jede Kontaktkorrosion durch salzhaltige Feuchtigkeit oder Flüssigkeit an der Verbindung zwischen der Kühlrippe 2 und der Rohrwand 1 (Abdeckung der Kathode - Edelstahl - mit Lötmaterial im Bereich der Verbindung).

Die Kühlrippen müssen wegen der Verwendung des erfindungsgemässen Lötmittels nicht mehr mit Lotmaterial plattiert und können damit kostengünstiger hergestellt werden.

Die Fig. 2 zeigt eine Schnittdarstellung des erfindungsgemässen Wärmetauscherrohr 8 - bestehend aus beschichtetem Baustahl- nach einem Lötprozess, der eine Rohrwand 1 mit einer Kühlrippe 2 hartlötend verbindet. Die Rohrwand 1 weisst an einer Innenwand 9 und einer Aussenwand 10 jeweils eine äussere Oberflächenvergütung 4 und eine innere Oberflächenvergütung 5 auf, welche zur Rohrwand 1 hin benachbart angeordnet ist. Die Kühlrippe 2 ist frei von einer Rippenbeschichtung und sie weist mit der äusseren Oberflächenvergütung 4 der Rohrwand 1 einen unmittelbaren Berührungskontakt auf.

Das Wärmetauscherrohr 8 weist nach dem Hartlötprozess eine feste Verbindung mittels einer Zwischenschicht 6 und Hartlot 7 zwischen der Kühlrippe 2 und der Rohrwand auf.

Das Herstellverfahren für die erfindungsgemässen Wärmetauscherrohre 8 sieht die folgenden Schritte vor:
1. Ein Kernband, der Stahlsorte DC01 (EN10130) beispielsweise, wird beidseitig durch Walzenpressen mit Auflagebändern versehen. Das Kernband stellt später die gezeigte Rohrwand 1 dar und die Auflagenbänder die äussere und innere Oberflächenvergütung 4, bzw. 5.
2. Das Kernband mit den Auflagenbändern wird minutenlang rekristallisationsgeglüht und das Gefüge wieder in den Ausgangszustand versetzt.
3. Ein anschliessendes Endwalzen versetzt das Kernband mit den Auflagebändern in den gewünschten Endzustand, bevor
4. die drei Bänder in einem Diffusionsglühverfahren metallurgische miteinander verbunden werden. Dabei entsteht unmittelbar zum Kernband hin eine feste und duktile Diffusionsschicht, die in Fig. 2 als innere bzw. äussere Oberflächenvergütung 5, 4 gezeigt ist.
5. Das vorliegende, plattierte Flachband aus Kernband und Auflagebändern wird zu einem Flachrohr gebogen und mittels Schweissen entlang einer Rohrlängsnaht geschlossen. Diese Schweissnaht wird einer Glättung unterzogen, eine weitere Behandlung ist nicht notwendig.
6. Für die Fertigung der Kühlrippe 2 steht ein Band aus einer Aluminiumlegierung oder reinem Aluminium bereit; dieses Kaltband wird in eine dreidimensionale Kühlrippenform kalt umgeformt.
7. Das Lötmittel wird auf einer zu lötenden Fläche für die Verbindung zu den Kühlrippen 2, auf einer Fläche zwischen den Kühlrippen und über die seitlichen Aussenbereichen der Kühlrippen mindestens 5mm hinausragend auf die Rohrwand 1 aufgetragen. Das Lötmittel besteht zu 30% aus einem Lötpulver (AA4047) mit einer Partikelgrösse <100µm, zu 34% aus einem Flussmittel vom Typ NOKOLOK® und zu 26% aus einem Binder. Dieses Lötmittel wird mit einer Beladung von 300g/m2 auf das Flachrohr aufgetragen und zwar sowohl an den Berührungsstellen der Kühlrippen 2 mit der Rohrwand 1, zwischen den Kühlrippen und seitlich über die Kühlrippen hinaus.
8. Das so beschichtete Flachrohr und die Kühlrippen werden zusammengeführt.
9. Nach einem Bestreichen der Rohrwand 1 mit dem erfindungsgemässen Lötmittel werden Kühlrippen 2 und Rohrwand 1 durch einen kontinuierlichen Hartlötprozess zu einem Wärmetauscherrohr 8 miteinander verbunden, womit eine feste, spalt- und porenfreie Lötverbindung zwischen der Kühlrippe 2 und der Rohrwand 1 entsteht.

Es bildet sich auch hier eine fest haftende Lötverbindung zwischen der Kühlrippe 2 und der Rohrwand 1 mit guter Wärmeleitfähigkeit aus und eine ca. 5 - 200 µm dicke, oberflächige Abdeckschicht 3 aus festem Lotmaterial 7 zwischen den Kühlrippen 2 und in unmittelbarer Nähe der Kühlrippen, welche metallurgisch mit der Rohrwand 1 und der Lötverbindung verbunden ist und gut haftet. Des Weiteren bildet sich eine Zwischenschicht 6 aus Eisen-Aluminiden mit einer Dicke von <10µm zwischen der Rohrwand 1 und der Abdeckschicht 3 aus.

Diese Verbindung zwischen der Rohrwand 1 und der Kühlrippe 2 verunmöglicht jede Kontaktkorrosion durch salzhaltige Feuchtigkeit oder Flüssigkeit an der Verbindung zwischen der Kühlrippe 2 und der Rohrwand 1 (Abdeckung der Kathode - Edelstahl - mit Lötmaterial im Bereich der Verbindung).

Die Kühlrippen 2 müssen wegen der Verwendung des erfindungsgemässen Lötmittels nicht mehr mit Lotmaterial plattiert und können damit kostengünstiger hergestellt werden.

Erfindungsgemäss zeigen sich die hervorragenden Eigenschaften hinsichtlich der Lötbarkeit und der Korrosionsbeständigkeit gegenüber fluiden Medien (in den Fig. nicht dargestellt) im Wärmetauscherrohr 8, wenn das Kernband beidseitig eine Plattierung mittels der Auflagebänder aufweist und wenn diese Auflagebänder aus Kupfer, Zink, Nickel, Kobalt, Chrom, einer Nickellegierung, einer Chromlegierung, einer Kupferlegierung, einer Zinklegierung, einer Kobaltlegierung oder rostfreiem Stahl bestehen.

Beispielhaft zeigt sich anhand einer Nickellegierung Inconel Alloy 825 (IN 825) für die Auflagebänder die folgende Materialverteilung bei der Herstellung der Wärmetauscherrohre 8. Nach der Diffusionsglühbehandlung des Kernbands mit der beidseitigen plattierten Auflagebändern aus Inconel Alloy besteht die Diffusionsschicht - die innere Oberflächenvergütung 5 des Wärmetauscherrohrs 8 - aus einer kristallin ungeordneten Mischstruktur, in welcher sich vor allem die Elemente Eisen, Nickel und Chrom gleichmässig der jeweils plattierten Legierung anpassen. Die äussere Oberflächenvergütungsschicht 4 besteht weiterhin aus Inconel Alloy.

Beim Hartverlöten der Kühlrippe 2 mit der Rohrwand 1 entsteht die Reaktionszone mit einer geordneten Phase aus Al-Ni-Fe-Si-Cr. Diese Reaktionszone Al-Ni-Fe-Si-Cr steht nach dem Hartlöten und während des Betriebs aufgrund der bewusst verschieden gewählten Ausdehnungskoeffizienten der beteiligten Legierungen unter einer leichten Druckspannung, womit sich die mechanische Integrität der gesamten Lötverbindung erhöht.

Ohne den Erfindungsgedanken zu verlassen zeigen alle weiteren, aufgezeigten Materialien für die Plattierung mittels Auflagebändern entsprechend herauszustellende Eigenschaften hinsichtlich der guten Lötbarkeit zwischen Kühlrippe 2 und Rohrwand 1 und der Korrosionsbeständigkeit auf der Innenseite des Wärmetauscherrohrs 8 zu einem fluiden Medium hin.

### Bezugszeichenliste

- 1: Rohrwand
- 2: Kühlrippe
- 3: Abdeckschicht
- 4: äussere Oberflächenvergütung
- 5: innere Oberflächenvergütung
- 6: Zwischenschicht
- 7: Hartlot
- 8: Wärmetauscherrohr
- 9: Innenwand
- 10: Aussenwand

## Patentansprüche

1. Verfahren zur Herstellung von Wärmetauscherrohren durch Hartverlöten umfassend ein durchströmtes Rohr (8) mit einer Anzahl an einer Aussenwand (10) angeordneten Kühlrippen (2) ***dadurch gekennzeichnet, dass*** das Rohr (8) aus rostfreiem Edelstahl oder plattiertem Baustahl bestehend mit einem Lötmittel lokal beschichtet wird, zwecks direkten Hartverlötens der Anzahl Kühlrippen (2) mit der Aussenwand (10) und zwecks Gewährleistung einer Korrosionsbeständigkeit der Aussenwand (10) gegenüber äusseren Einflüssen, die Kühlrippen (2) aus einer Aluminiumlegierung oder reinem Aluminium gefertigt sind und bei Verwendung eines Rohrs aus rostfreiem Edelstahl das Lötmittel ein beidseitig mit einem Flussmittel bestrichenes Lötmaterialband umfasst bzw. bei Verwendung eines Rohrs aus plattiertem Baustahl das Lötmittel ein Lötmaterial in Pulverform, ein Flussmittel und einen Binder umfasst, und dass das Lötmittel zwischen benachbarten Kühlrippen (2) auf dem Rohr appliziert wird, zwecks Bereitstellung eines Korrosionsschutzes.

2. Verfahren nach Anspruch 1, **dadurch gekennzeichnet, dass** das Lötmittel seitlich über eine Berührungsfläche zwischen dem Rohr (8) und den Kühlrippen (2) hinausragend appliziert wird, zwecks Bereitstellung eines Korrosionsschutzes.

3. Verfahren nach einem der Ansprüche 1 oder 2, **dadurch gekennzeichnet, dass** zur Herstellung des Rohrs (8) ein Blechband aus rostfreiem Edelstahl zu einem Flachrohr geformt wird und verschweisst wird.

4. Wärmetauscherrohr, umfassend ein durchströmtes Rohr (8) mit einer Anzahl Kühlrippen (2), wobei das Rohr (8) aus einem rostfreien Edelstahl oder plattiertem Baustahl besteht und mit einem Lötmittel an einer zu lötenden Fläche appliziert ist, zwecks direkter Hartverlötbarkeit der Anzahl Kühlrippen (2) mit der Aussenwand (10) und zwecks Korrosionsbeständigkeit einer Aussenwand (10) des Rohrs (8) gegenüber äusseren Einflüssen, ***dadurch gekennzeichnet, dass*** die Kühlrippen aus einer Aluminiumlegierung oder reinem Aluminium bestehen und das Rohr (8) aus einem rostfreien Edelstahl oder plattiertem Baustahl besteht und mit einem Lötmittel an einer zu lötenden Fläche appliziert ist, zwecks direkter Hartverlötbarkeit der Anzahl Kühlrippen (2) mit der Aussenwand (10) und zwecks Korrosionsbeständigkeit einer Aussenwand (10) des Rohrs (8) gegenüber äusseren Einflüssen, wobei bei Verwendung eines Rohrs aus rostfreiem Edelstahl das Lötmittel ein beidseitig mit einem Flussmittel bestrichenes Lötmaterialband umfasst bzw. dass bei Verwendung eines Rohrs aus plattiertem Baustahl das Lötmittel ein Lötmaterial in Pulverform, ein Flussmittel und einen Binder umfasst, und dass das Lötmittel zwischen benachbarten Kühlrippen (2) auf dem Rohr appliziert ist, zwecks Bereitstellung eines Korrosionsschutzes.

5. Wärmetauscherrohr nach Anspruch 4, **dadurch gekennzeichnet, dass** das Lötmittel seitlich über eine Berührungsfläche zwischen dem Rohr (8) und den Kühlrippen (2) hinausragend appliziert ist, zwecks Bereitstellung eines Korrosionsschutzes.

6. Wärmetauscherrohr nach einem der Ansprüche 4 oder 5, **dadurch gekennzeichnet, dass** das Rohr (8) aus einem Blechband aus rostfreiem Edelstahl zu einem Flachrohr geformt und verschweißt ist.

## Claims

1. Method for manufacturing heat exchanger pipes by brazing, comprising a flowed-through pipe (8) with a number of cooling ribs (2) arranged on an outer wall (10), **characterized in that** the pipe (8), consisting of stainless high-grade steel or clad structural steel, is coated locally with a braze, for the purpose of brazing the number of cooling ribs (2) directly to the outer wall (10) and for the purpose of ensuring a corrosion resistance of the outer wall (10) with respect to external influences, the cooling ribs (2) are produced from an aluminium alloy or pure aluminium and, when a pipe of stainless high-grade steel is used, the braze comprises a strip of brazing material coated on both sides with a flux and, when a pipe of clad structural steel is used, the braze comprises a brazing material in powder form, a flux and a binder, and **in that** the braze is applied between adjacent cooling ribs (2) on the pipe, for the purpose of providing corrosion protection.

2. Method according to Claim 1, **characterized in that** the braze is applied laterally over an area of contact between the pipe (8) and the cooling ribs (2), for the purpose of providing corrosion protection.

3. Method according to either of Claims 1 and 2, **characterized in that**, for manufacturing the pipe (8), a sheet-metal strip of stainless high-grade steel is formed into a flat tube and welded.

4. Heat exchanger pipe, comprising a flowed-through pipe (8) with a number of cooling ribs (2), wherein the pipe (8) consists of a stainless high-grade steel or clad structural steel and is applied with a braze at an area to be brazed, for the purpose of allowing the number of cooling ribs (2) to be brazed directly to the outer wall (10) and for the purpose of corrosion resistance of an outer wall (10) of the pipe (8) with respect to external influences, **characterized in that** the cooling ribs (2) consist of an aluminium alloy or pure aluminium and the pipe (8) consists of a stainless high-grade steel or clad structural steel and is applied with a braze at an area to be brazed, for the purpose of allowing the number of cooling ribs (2) to be brazed directly to the outer wall (10) and for the purpose of corrosion resistance of an outer wall (10) of the pipe (8) with respect to external influences, wherein, when a pipe of stainless high-grade steel is used, the braze comprises a strip of brazing material coated on both sides with a flux and, when a pipe of clad structural steel is used, the braze comprises a brazing material in powder form, a flux and a binder, and **in that** the braze is applied between adjacent cooling ribs (2) on the pipe, for the purpose of providing corrosion protection.

5. Heat exchanger pipe according to Claim 4, **characterized in that** the braze is applied laterally over an area of contact between the pipe (8) and the cooling ribs (2), for the purpose of providing corrosion protection.

6. Heat exchanger pipe according to either of Claims 4 and 5, **characterized in that** the pipe (8) is formed into a flat tube from a sheet-metal strip of stainless high-grade steel and welded.

## Revendications

1. Procédé de fabrication de tuyaux d'échangeur de chaleur par brasage dur comprenant un tuyau parcouru (8) avec un nombre d'ailettes de refroidissement (2) disposées sur une paroi extérieure (10), **caractérisé en ce que** le tuyau (8) se composant d'acier allié inoxydable ou d'acier de construction revêtu est recouvert localement d'une brasure, en vue d'effectuer le brasage dur direct du nombre d'ailettes de refroidissement (2) avec la paroi extérieure (10) et en vue de garantir une résistance à la corrosion de la paroi extérieure (10) à l'égard d'influences extérieures, les ailettes de refroidissement (2) sont fabriquées en un alliage d'aluminium ou en aluminium pur et en cas d'utilisation d'un tuyau en acier allié inoxydable la brasure comprend une bande de matière de brasage enduite de fondant sur les deux faces ou en cas d'utilisation d'un tuyau en acier de construction revêtu la brasure comprend une matière de brasage sous forme de poudre, un fondant et un liant, et **en ce que** la brasure est appliquée sur le tuyau entre des ailettes de refroidissement voisines (2), en vue de fournir une protection contre la corrosion.

2. Procédé selon la revendication 1, **caractérisé en ce que** l'on applique la brasure en saillie latéralement au-dessus d'une face de contact entre le tuyau (8) et les ailettes de refroidissement (2), en vue de fournir une protection contre la corrosion.

3. Procédé selon une des revendications 1 ou 2, **caractérisé en ce que** pour la fabrication du tuyau (8) on forme une bande de tôle en acier allié inoxydable en un tube plat et on le soude.

4. Tuyau d'échangeur de chaleur, comprenant un tuyau parcouru (8) avec un nombre d'ailettes de refroidissement (2), dans lequel le tuyau (8) est constitué d'un acier allié inoxydable ou d'un acier de construction revêtu et est appliqué avec une brasure sur une face à braser, pour l'aptitude au brasage dur direct du nombre d'ailettes de refroidissement (2) à la paroi extérieure (10) et pour la résistance à la corrosion d'une paroi extérieure 10) du tuyau (8) à l'égard d'influences extérieures, **caractérisé en ce que** les ailettes de refroidissement sont constituées d'un alliage d'aluminium ou d'aluminium pur et le tuyau (8) est constitué d'un acier allié inoxydable ou d'un acier de construction revêtu et est appliqué avec une brasure sur une face à braser, pour l'aptitude au brasage dur direct du nombre d'ailettes de refroidissement (2) à la paroi extérieure (10) et pour la résistance à la corrosion d'une paroi extérieure (10) du tuyau (8) à l'égard d'influences extérieures, dans lequel en cas d'utilisation d'un tuyau en acier allié inoxydable la brasure comprend une bande de matière de brasage enduite de fondant sur les deux faces ou en cas d'utilisation d'un tuyau en acier de construction revêtu la brasure comprend une matière de brasage sous forme de poudre, un fondant et un liant, et **en ce que** la brasure est appliquée sur le tuyau entre des ailettes de refroidissement voisines (2), en vue de fournir une protection contre la corrosion.

5. Tuyau d'échangeur de chaleur selon la revendication 4, **caractérisé en ce que** la brasure est appliquée en saillie latéralement au-dessus d'une face de contact entre le tuyau (8) et les ailettes de refroidissement (2), en vue de fournir une protection contre la corrosion.

6. Tuyau d'échangeur de chaleur selon une des revendications 4 ou 5, **caractérisé en ce que** le tuyau (8) est formé à partir d'une bande de tôle en acier allié inoxydable en un tuyau plat et est soudé.
